# EUROPÄISCHE PATENTSCHRIFT

(11) **EP 0 508 248 B1**
(45) Veröffentlichungstag und Bekanntmachung des Hinweises auf die Patenterteilung: **15.06.1994**
(21) Anmeldenummer: 92105406.0
(22) Anmeldetag: 28.03.1992
(51) Int. Cl.: B60R 16/04

(54) **Vorrichtung zum Aufnehmen und Halten einer Starterbatterie**
Device for positioning and fixing of a starter battery
Dispositif de positionnement et de fixation d'une batterie de démarreur

(30) Priorität: 30.03.1991 DE 4110552
(43) Veröffentlichungstag der Anmeldung: 14.10.1992
(73) Patentinhaber: AUDI AG, 85002 Ingolstadt (DE)
(72) Erfinder: Stock, Bernhard, W-8079 Adelschlag (DE)

(56) Entgegenhaltungen:
- EP-A- 0 238 383
- DE-A- 2 150 457
- DE-U- 8 513 259
- US-A- 2 869 663
- US-A- 3 993 378

## Beschreibung

Die Erfindung betrifft eine Vorrichtung zum Aufnehmen und Halten einer Starterbatterie in einem Kraftfahrzeug, mit einem an dem Kraftfahrzeug angebrachten Batteriegehäuse und Befestigungsmitteln, die Bereiche der Batterie übergreifen (siehe z.B. EP-A-0 238 383).

Zur sicheren Befestigung der relativ schweren Starterbatterien in Kraftfahrzeugen sind diese meist mit dem Batteriegehäuse verschraubt. Bei einer bekannten Befestigung sind an den beiden Breitseiten der Batterie Sockelleisten vorgesehen, die von mit dem Batteriegehäuse verschraubten Spannpratzen übergriffen sind. Eine derartige Befestigung erfordert aber ausreichende Platzverhältnisse im Batteriegehäuse und einen entsprechenden Montageaufwand.

Aufgabe der Erfindung ist es, eine Vorrichtung der gattungsgemäßen Art vorzuschlagen, die konstruktiv einfach und zuverlässig ist und die einen geringeren Montageaufwand für die Batterie erfordert.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird eine vollkommen schraubenlose Befestigung mittels einer oder mehrerer Federzungen vorgeschlagen, die eine einfache Montage durch Einrasten der Batterie gegebenenfalls aufgrund ihres Eigengewichtes ermöglicht. Ferner kann durch die Federzungen das Batteriegehäuse klein gehalten werden, weil nur ein geringer Zwischenraum zwischen den Seitenwänden der Batterie und den umgebenden Wandabschnitten des Batteriegehäuses erforderlich ist. Schließlich ist durch die Federzungen eine einfache, unkomplizierte Konstruktion geschaffen.

Bevorzugt sind die Federzungen in dem seitlichen Wandabschnitt des Batteriegehäuses angeordnet und wirken auf eine vorstehende Sockelleiste, die an der Batterie ausgebildet ist. Alternativ könnten die Federzungen jedoch auch die Batterie an ihrer Oberseite übergreifen.

Die Federzungen können bevorzugt L-förmig gemäß Anspruch 3 gestaltet sein, wodurch sich eine einfache Konfiguration und eine sichere Halterung bzw. Befestigung ergibt. Gegebenenfalls bei Beschleunigungen oder Verzögerungen auf die Batterie wirkende Kräfte werden zuverlässig über die Federzungen abgestützt, ohne diese in Löserichtung zu belasten.

Wenn sich der kürzere Schenkel der Federzungen durch eine Öffnung in dem seitlichen Wandabschnitt des Batteriegehäuses erstreckt, kann der nach außen ragende Endbereich manuell oder mittels eines Werkzeuges bewegt und dadurch die Haltewirkung der Federzungen bei einer Demontage aufgehoben werden.

Die Federzungen können aus Stahl hergestellt und an Wandabschnitten des Batteriegehäuses durch Nieten oder Schrauben befestigt sein. In vorteilhafter Weiterbildung wird jedoch vorgeschlagen, das Batteriegehäuse oder zumindest Abschnitte davon aus Kunststoff herzustellen und die Federzungen unmittelbar an die entsprechende Wandabschnitte anzuformen.

Dann kann gemäß Anspruch 8 auch ein gegebenenfalls die Batterie bzw. das Batteriegehäuse abschließender Deckel aus Kunststoff ebenfalls durch entsprechend ausgebildete Rasteinrichtungen aufclipsbar ausgebildet sein. Dies trägt ebenfalls zur Verringerung des Montageaufwandes bei einer vollständig gekapselten Batterie bei.

Ein Ausführungsbeispiel der Erfindung ist im folgenden mit weiteren Einzeleinheiten näher erläutert. Die schematische Zeichnung zeigt einen teilweisen Längsschnitt durch eine erfindungsgemäße Vorrichtung zum Aufnehmen und Halten einer Starterbatterie eines Kraftfahrzeuges mit einem Batteriegehäuse aus Kunststoff und mit einer die Batterie haltenden Federzunge.

Das nur teilweise dargestellte Batteriegehäuse 10 aus einem glasfaserverstärkten Kunststoff setzt sich zusammen aus einem Boden 12, an dem eine um die Batterie 14 umlaufende Seitenwand 16 angeformt ist. Das schalenförmige Batteriegehäuse 10 ist über eine Konsole 18, die ebenfalls aus Kunststoff besteht und unmittelbar an das Gehäuse 10 angeformt ist, an einem nicht dargestellten Radhausblech im Motorraum des Kraftfahrzeuges befestigt.

Die Batterie 14 weist an ihren beiden Breitseiten zu deren Halterung dienende, vorstehende Sockelleisten 20 auf (in der teilweisen Darstellung ist nur die eine Sockelleiste 20 ersichtlich). Auf diese Sockelleisten 20 wirkt auf eine definierte Länge je eine Federzunge 22.

Die Federzunge 22 ist unmittelbar an einen seitlichen Wandabschnitt 24 der umlaufenden Seitenwand 16 angeformt und ist im Querschnitt L-förmig gestaltet. Dabei erstreckt sich der längere Schenkel 26 nach unten und im wesentlichen senkrecht zu der leicht angeschrägten Stützfläche 28 der Sockelleiste 20.

An den Schenkel 26 schließt ein etwa parallel zur Stützfläche 28 verlaufender kürzerer Schenkel 30 an, der sich mit seinem Endbereich durch eine Öffnung 32 in dem Wandabschnitt 24 nach außerhalb des Batteriegehäuses 10 erstreckt. In dem Schenkel 30 ist ein rechteckiger Durchbruch 34 eingearbeitet, durch den beispielsweise - wie in strichpunktierten Linien dargestellt - ein Schraubenzieher als Werkzeug einsteckbar ist, so daß in Verbindung mit der Seitenwand 16 die Federzunge 22 zur Aufhebung deren Haltewirkung nach außen spannbar ist.

Im Bereich des Bodens 12 sind an den Seitenwänden 16 mehrere Zentrierrippen 36 vorgesehen, die die Lage der Batterie 14 innerhalb des Batteriegehäuses 10 genau definieren.

Zur Montage der Batterie 14 ist diese lediglich in das Batteriegehäuse 10 hineinzuheben und senkrecht abzusenken. Dabei streifen dann die Bodenkanten der Sockelleisten 20 über die an dem längeren Schenkel 26 gebildete schräge Fläche und spannen dabei die Federzunge 22 nach außen, bis der kürzere Schenkel 34 auf die Stützfläche 28 einschwenken kann und dabei die Batterie 14 spielfrei hält. Durch die senkrecht zur Stützfläche 28 wirkende Kraftrichtung (Pfeil 38) können auf die Batterie wirkende Beschleunigungskräfte nicht zu einer gewaltsamen Entriegelung führen.

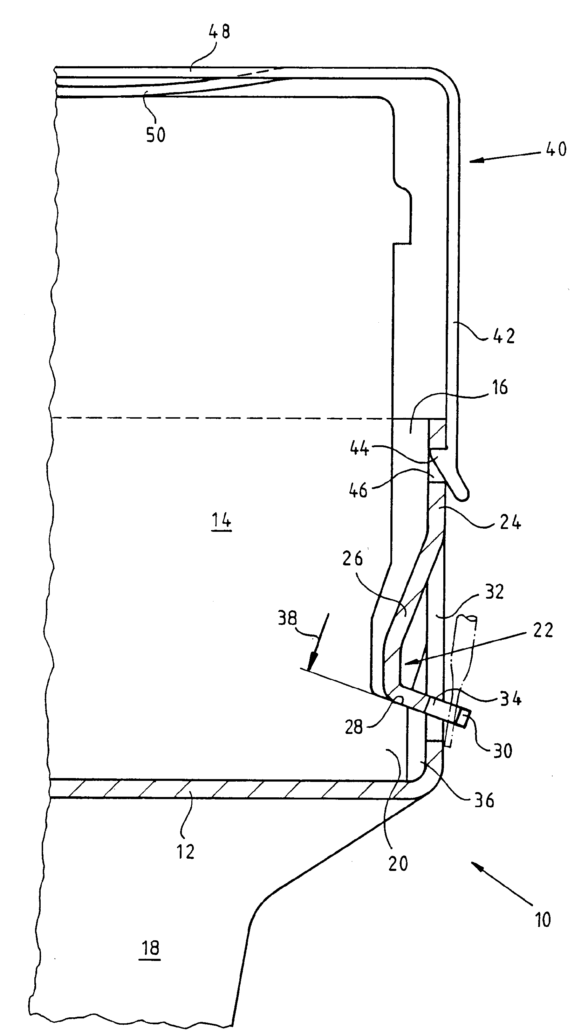

Die auf der Zeichnung nicht dargestellte linke Breitseite der Batterie 14 bzw. des Batteriegehäuses 10 kann spiegelbildlich gleich der rechten Seite sein. Es ist jedoch auch denkbar, durch schräges Hineinkippen der Batterie einen Seitenwandabschnitt mit einer festen Rippe entsprechend der Federzunge 22 auszubilden und somit nur eine Federzunge 22 zu verwenden.

Zur vollständigen Kapselung der Batterie 14 ist ferner ein Deckel 40 aus Kunststoff vorgesehen, der ebenfalls an den Breitseiten der Batterie an der umlaufenden Deckelwand 42 Rastvorsprünge 44 aufweist, die in Verbindung mit einem Durchbruch 46 in der umlaufenden Seitenwand 16 des Batteriegehäuses 10 eine Clipsverbindung ergibt. Eine an der Oberseite 48 des Deckels 40 angeformte Federleiste 46 sorgt dabei für eine klapperfreie Vorspannung des Deckels 40 zum Batteriegehäuse 10.

## Patentansprüche

1. Vorrichtung zum Aufnehmen und Halten einer Starterbatterie (14) in einem Kraftfahrzeug, mit einem an dem Kraftfahrzeug angebrachten Batteriegehäuse (10) und Befestigungsmitteln (22), die Bereiche der Batterie übergreifen, **dadurch gekennzeichnet**, daß die Befestigungsmittel ein oder mehrere, am Batteriegehäuse (10) vorgesehene Federzungen (22) sind.

2. Vorrichtung nach Anspruch 1, **dadurch gekennzeichnet**, daß die Federzungen (22) in einem seitlichen Wandabschnitt (24) des Batteriegehäuses (10) angeordnet sind und eine vorstehende Sockelleiste (20) der Batterie (14) übergreifen.

3. Vorrichtung nach den Ansprüchen 1 und 2, **dadurch gekennzeichnet**, daß die Federzungen (22) L-förmig gestaltet sind, wobei der jeweils längere, nach unten ragende Schenkel (26) in das Batteriegehäuse (10) einragt und etwa senkrecht zur Stützfläche (28) der Sockelleiste (20), jedoch schräg zur Seitenwand (16) der Batterie (14) verläuft.

4. Vorrichtung nach Anspruch 3, **dadurch gekennzeichnet**, daß die kürzeren Schenkel (30) der L-förmigen Federzungen (22) sich durch eine Öffnung (32) in dem seitlichen Wandabschnitt (24) des Batteriegehäuses (10) nach außen erstrecken.

5. Vorrichtung nach Anspruch 4, **dadurch gekennzeichnet**, daß die nach außen ragenden Endbereiche der Schenkel (30) Mittel (Durchbrüche 34) zum Ansetzen eines Werkzeuges zum Zurückbewegen der Federzungen (22) aufweisen.

6. Vorrichtung nach einem der vorhergehenden Ansprüche, **dadurch** **gekennzeichnet**, daß das Batteriegehäuse (10) an dessen Bodenplatte (12) und/oder an deren Seitenwand (16) mit Zentrierrippen (36) für die Batterie (14) versehen ist.

7. Vorrichtung nach einem oder mehreren der Ansprüche 1 - 6, **dadurch** gekennzeichnet, daß das Batteriegehäuse (10) aus Kunststoff hergestellt ist und daß die Federzungen (22) und/oder die Zentrierrippen (36) unmittelbar an das Batteriegehäuse (10) angeformt sind.

8. Vorrichtung nach Anspruch 7, **dadurch gekennzeichnet**, daß die Seitenwand (16) des Batteriegehäuses (10) und ein Deckel (40) aus Kunststoff ferner mit Rasteinrichtungen (44,46) zum Aufclipsen des Deckels (40) auf das Batteriegehäuse (10) versehen sind.

## Claims

1. Device for receiving and retaining a starter battery (14) in a motor vehicle, having a battery case (10) mounted on the motor vehicle and attachment means (22) which overlap areas of the battery, characerised in that the attachment means are one or more flexible tongues (22) provided on the battery case (10).

2. Device according to claim 1, characterised in that the flexible tongues (22) are arranged in a lateral wall section (24) of the battery case (10) and overlap a protruding bottom mounting rail (20) of the battery (14).

3. Device according to claims 1 and 2, characterised in that the flexible tongues (22) are L-shaped, with the respective longer, downward-projecting leg (26) projecting into the battery case (10) and extending more or less perpendicular to the supporting surface (28) of the bottom mounting rail (20) but obliquely to the side wall (16) of the battery (14).

4. Device according to claim 3, characterised in that the shorter legs (30) of the L-shaped flexible tongues (22) extend out through an opening (32) in the lateral wall section (24) of the battery case (10).

5. Device according to claim 4, characterised in that the outward-projecting end portions of the legs (30) incorporate means (passages 34) for the attachment of a tool for moving back the flexible tongues (22).

6. Device according to any of the preceding claims, characterised in that the battery case (10) is provided on its baseplate (12) and/or on the side wall (16) thereof with centring ribs (36) for the battery (14).

7. Device according to one or more of claims 1 to 6, characterised in that the battery case (10) is made of plastic and that the flexible tongues (22) and/or the centring ribs (36) are moulded directly onto the battery case (10).

8. Device according to claim 7, characterised in that the side wall (16) of the battery case (10) and a lid (40) made of plastic are also provided with latching devices (44, 46) for clipping the lid (40) onto the battery case (10).

## Revendications

1. Dispositif pour le logement et le maintien d'une batterie démarreur (14) dans un véhicule automobile, comprenant un bac de batterie (10) monté sur le véhicule et des moyens de fixation (22) qui s'engagent sur des régions de la batterie, caractérisé en ce que les moyens de fixation sont constitués par une ou plusieurs lames de ressort (22) prévues sur le bac de batterie (10).

2. Dispositif selon la revendication 1, caractérisé en ce que les lames de ressort (22) sont disposées dans une partie latérale (24) de la paroi du bac de batterie (10) et s'engagent sur un rebord saillant (20) du socle de la batterie (14).

3. Dispositif selon la revendication 1 ou 2, caractérisé en ce que les lames de ressort sont conformées en L, la plus longue branche (26), dirigée vers le bas, pénétrant dans le bac de batterie (20) et s'étendant à peu près perpendiculairement à la surface d'appui (28) du rebord (20) du socle, mais obliquement par rapport à la paroi latérale (16) de la batterie (14).

4. Dispositif selon la revendication 3, caractérisé en ce que les branches courtes (30) des lames de ressort en forme de L (22) s'étendent vers l'extérieur en passant à travers une ouverture (32) dans la partie latérale (24) de la paroi du bac de batterie (10).

5. Dispositif selon la revendication 4, caractérisé en ce que les parties d'extrémité des branches (30), en saillie vers l'extérieur, comportent des moyens (fentes 34) pour saisir les lames de ressort au moyen d'un outil et les ramener en arrière.

6. Dispositif selon l'une quelconque des revendications 1 à 5, caractérisé en ce que le bac de batterie (10) est muni, sur sa plaque de fond (12) et/ou sur sa paroi latérale (16), de nervures de centrage (36) pour la batterie (14).

7. Dispositif selon l'une quelconque des revendications 1 à 6, caractérisé en ce que le bac de batterie (10) est fabrique en matière plastique et en ce que les lames de ressort (22) et/ou les nervures de centrage sont formées directement par moulage sur le bac de batterie (10).

8. Dispositif selon la revendication 7, caractérisé en ce que la paroi latérale (16) du bac de batterie (10) et un couvercle (40) en matière plastique sont en outre munis d'éléments d'encliquetage (44, 46) pour le verrouillage instantané du couvercle (40) sur le bac de batterie (10).
